## Europäisches Patentamt

## European Patent Office

## Office européen des brevets

(19)

(11) Publication number: **0 271 947 B1**

(12) # EUROPEAN PATENT SPECIFICATION

(45) Date of publication of patent specification: **28.07.93**    (51) Int. Cl.⁵: **H04M 1/76**, H04M 1/60

(21) Application number: **87202394.0**

(22) Date of filing: **02.12.87**

(54) Gain control circuit.

(30) Priority: **16.12.86 BE 2061113**

(43) Date of publication of application:
**22.06.88 Bulletin 88/25**

(45) Publication of the grant of the patent:
**28.07.93 Bulletin 93/30**

(84) Designated Contracting States:
**AT CH DE ES FR GB IT LI NL SE**

(56) References cited:
**EP-A- 0 102 660**
**EP-A- 0 163 409**
**NL-A- 7 205 691**
**NL-A- 8 203 979**
**US-A- 4 301 445**

(73) Proprietor: **Alcatel N.V.**
**Strawinskylaan 537 (World Trade Center)**
**NL-1077 XX Amsterdam(NL)**

(72) Inventor: **Moons, Elve Desiderius Jozef**
**Vandermarckestraat 27**
**B-3920 Lummen(BE)**

(74) Representative: **Vermeersch, Robert et al**
**BELL TELEPHONE MANUFACTURING COM-**
**PANY Naamloze Vennootschap Patent De-**
**partment Francis Wellesplein 1**
**B-2018 Antwerpen (BE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.6/3.3.1)

EP 0 271 947 B1

## Description

The present invention relates to a gain control circuit for a telecommunication device which is coupled via a line to an exchange which supplies DC line current to said device over said line, said control circuit having a signal input which is coupled with an input of a voltage divider, having a control input which is fed by a voltage which is function of said DC line current, and having a signal output on said voltage divider on which appears an output signal whose gain is function of said DC line current.

Such a gain control circuit is already known from British patent No 1328917 (C.M. Tabalba 4). Therein the voltage divider is constituted by a fixed resistance and by a variable resistance which is connected to the control input and is constituted by diodes. Hence, the diode resistance which is introduced for each value of the DC line current is dependent on the diode characteristic and therefore has a fixed value, so that also the gain control in function of the DC line current cannot be regulated.

An object of the present invention is to provide a gain control circuit of the above type, but which does not present this drawback.

According to the invention, this object is achieved due to the fact that at least a number of the constituent impedances of said voltage divider are coupled in parallel with electronic switches which are controlled from tapping points of a second voltage divider which is fell by said voltage and by a constant current Supplied by constant current source means.

Due to the constant current the voltage drops in the second voltage divider are constant and because this voltage divider is fed by a voltage which is function of the line DG current the switches are operated for values of this DC current which are dependent on these voltage drops. By the choice of these voltage drops, by means of the constant current and the resistances of the second voltage divider, and by the choice of the resistances of the first mentioned voltage divider each wanted curve followed by the gain control may be realized.

It should be noted that Dutch patent application NL-A-8203979 already discloses a gain control circuit wherein impedances of a first voltage divider are coupled to electronic switches which are controlled from tapping points of a second voltage divider through which a constant current flows and by a control voltage. However, in this known gain control circuit the switches are indirectly controlled from the tapping points since these tapping points are connected to respective comparator circuits which are controlled in common by the control voltage, the outputs of these comparator circuits then controlling the switches The presence of these comparator circuits makes the gain control circuit complex when compared with the control circuit of the present invention where the switches are directly controlled from the tapping points of the second voltage divider.

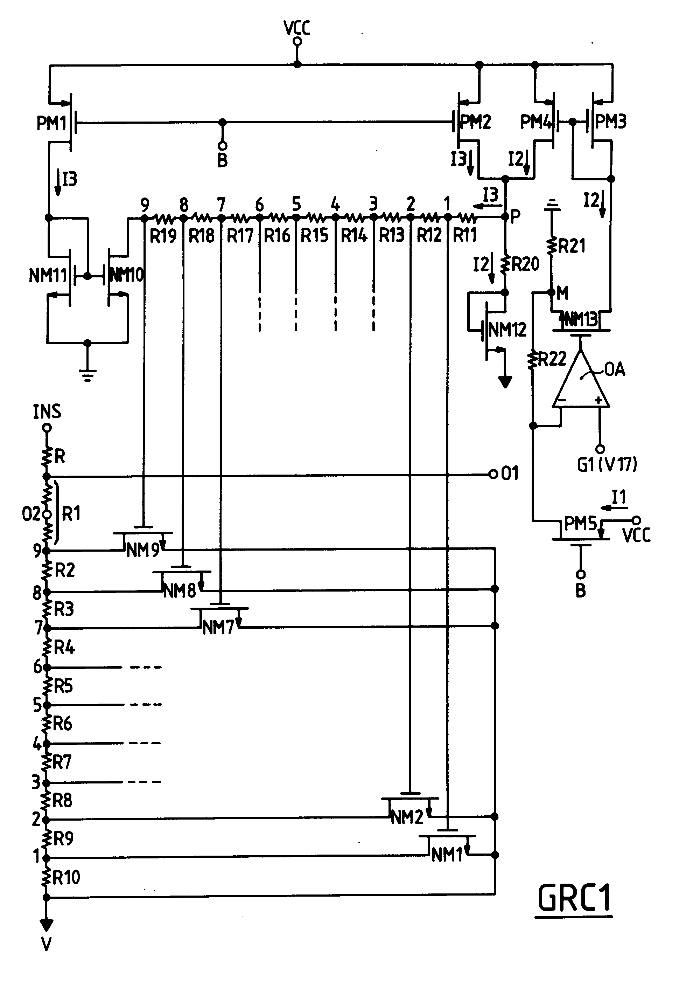

The above mentioned and other objects and features of the invention will become more apparent and the invention itself will be best understood by referring to the following description of an embodiment taken in conjunction with the accompanying drawing which represents a gain control circuit GRC1 according to the invention.

The circuit GRC1 operates with the supply voltages VCC, V and B and is used in the copending patent application EP-A-0271946 of even date and entitled "Telecommunication device and circuits used therein". This device is coupled via a line to an exchange which supplies DC current to the device via this line. One of the conductors of this line is indicated in the drawing by the usual ground symbol. VCC is a regulated DC voltages; V is a reference DC voltage which is represented by a triangle; and B is a constant bias voltage.

The circuit GRC1 has a signal input terminal INS, a control input terminal G1 and a signal output terminal 01. The signal input and output terminals INS and 01 are connected by a series resistance R which forms together with a set of resistances R1 to R10 which are connected in series and connected to V a controlled resistive voltage divider. The drain-to-source paths of NMOS transistors NM1; NM2; NM3; ...; NM8; NM9 are connected in parallel with the resistances R10; R9, R10; ...; R4 to R10; R3 to R10 and R2 to R10 respectively. The gates of these transistors are controlled from the respective tapping points 1 to 9 of another resistive voltage divider which is constituted by the resistances R11 to R19 which are connected in series with the drain-to-source path of NMOS transistor NM10 between a control point P and ground. The gate of NMOS transistor NM10 is connected with that of a diode connected NMOS transistor NM11 whose drain-to-source path is connected between VCC and ground in series with the source-to-drain path of PMOS transistor PM1. The constant bias voltage B is connected with the gate of transistor PM1 and also with that of PMOS transistor PM2 whose source-to-drain path is connected between VCC and ground in series with resistance R20 and with the diode connected NMOS transistor NM12. The above mentioned control point P is the junction point of PM2 and R20.

2

The control input terminal G1 is connected to the non-inverting input of an operational amplifier OA which together with PMOS transistors PM3 and PM5, NMOS transistor NM13 and resistances R21 and R22 constitutes a voltage-to-current converter. The output of OA is connected to the gate of transistor NM13 whose drain-to-source path is connected between VCC and ground in series with the source-to-drain path of the diode connected transistor PM3 and resistance R21. The gate of transistor PM3 is connected to the gate of PMOS transistor PM4 whose source-of-drain path is connected in parallel with the like-named path of transistor PM2. The inverting input of amplifier OA is connected via resistance R22 to the junction point of R21 and NM13, on the one hand, whilst VCC is connected to this inverting input via the source-to-drain path of transistor PM5 whose gate is connected to the bias voltage B, on the other hand.

The operation of the circuit is as follows, when it is supposed that a control voltage V17 is applied to the control input terminal G1. As mentioned in the above patent application this voltage is given by the relation

$$V17 = V + E \cdot I \qquad (1)$$

wherein E is a constant and I is proportional to the line DC current, i.e. to the DC current which flows in the line connecting the telecommunication device with the exchange.

By means of the circuit OA, NM3, PM3, PM5, R21, R22 this voltage is converted to a current I2 which is given by the relation

$$I2 = \frac{V17 - R22 \cdot I1}{R21} - I1$$

when I1 is the current which is provided by the constant current source constituted by transistor PM5.

Taking the relation (1) into account and when it is assumed that

$$R22 \cdot I1 = V \qquad (3)$$

the relation (2) becomes

$$I2 = \frac{E \cdot I}{R21} - I1$$

The current source PM5 is thus used to decrease the voltage on the source electrode M of transistor NM13 from V17 (without PM5) to

$$VM = V17 - V = E.I \qquad (5)$$

By the lower voltage on M, i.e. on the source of NM13, an improved control of OA is ensured.

The current I2 which flows through transistor PM3 is mirrored by transistor PM4 and therefore flows from VCC to the central point P. This current I2 further flows from the point P to ground exclusively via R20 and NM12 and not via R11 to R19 and NM10, as will become clear from the following.

Transistors PM1 and PM2 each constitute a constant current source generating a current I3. This current is mirrored by NM10, so that I3 flows from VCC to the control point P as well as from this control point P to ground via R11 - R19 and NM10. In other words, the current I3 does not flow to ground via R20 and NM12, so that the current I2 + I3 which is supplied to the control point P via PM4 and PM2 really splits up in I2 flowing towards R20 and in I3 flowing towards R11.

The voltage in the control point P is therefore given by

$$VP = VT + R20 \cdot I2 \qquad (6)$$

wherein VT is the threshold voltage of the NMOS transistors used, or taking the relation (4) into account by :

$$VP = V + VT + R20 \left(\frac{E.I}{R21} - I1\right)$$

By the constant current I3 the following voltages are produced on the tapping points 1 to 9 of the voltage divider R11-R19 :

V1 = VP - v1 with v1 = R11.I3
V2 = VP - v2 with v2 = (R11 + R12) I3
.
.
.
V9 = VP - v9 with v9 = (R11 + R12 + ... + R19).I3 or in general :

Vn = VP - vn with n = 1, 2, ..., 9     (8)

Each transistor NMn (with n = 1, 2, ..., 9) thus becomes conductive when the respective gate-to-source voltage Vn-V at least exceeds VT, i.e. when

VP > VT + V + vn     (9)

or, taking the relation (7) into account, when

I > F + G.vn     (10)

wherein F and G are constants given by :

$$F = \frac{R21.I1}{E} \qquad\qquad (11)$$

$$\text{and } G = \frac{R20.E}{R21} \qquad\qquad (12)$$

This means that the resistances of the voltage divider R, R1/10 are switched-in or switched-off in function of the line DC current I and that this happens for values of this DC current which are dependent on the constant voltage drops v1 to vn. By the choice of these voltage drops, by means of I3 and R11/19, and by the choice of R, R1/10 each wanted relationship of I in function of R, R1/10 may be realized.

In a preferred embodiment the resistances R and R1 to R22 and the currents I1 and I3 have the following values :

| | |
|---|---|
| R | = 60 kilo-Ohms |
| R1 | = 37 kilo-Ohms |
| R2 | = 15 kilo-Ohms |
| R3 and R11 to R18 | = 10 kilo-Ohms |
| R4 = R5 = R6 = R19 | = 20 kilo-Ohms |
| R7 = R8 | = 25 kilo-Ohms |
| R9 = R20 | = 30 kilo-Ohms |
| R10 | = 38 kilo-Ohms |
| R21 | = 35 kilo-Ohms |
| R22 | = 100 kilo-Ohms |
| I1 | = 8 micro-Amperes |
| I3 | = 10 micro-Amperes |

In this way a substantially logarithmic curve of the gain control is obtained.

As described in the above mentioned patent application the telecommunication device includes a gain control circuit GRC1 and a background noise reduction circuit BNR which are described in the present application and in the European patent application EP-A-0271948 of even date and entitled "Telecommunication circuit". In this case GRC1 and BNR have a common terminal 01 and the part of resistance R1 between 01 and 02 forms part of BNR.

While the principles of the invention have been described above in connection with specific apparatus, it is to be clearly understood that this description is made only by way of example and not as a limitation on the scope of the invention.

**Claims**

1. Gain control circuit for a telecommunication device which is coupled via a line to an exchange which supplies DC line current to said device over said line, said control circuit having a signal input (INS) which is coupled with an input of a first voltage divider (R, R1/10), having a control input (G1) which is fed by a control voltage which is function of said DC line current, and having a signal output (01) on said first voltage divider on which appears an output signal whose gain is function of said DC line current, characterized in that impedances of said first voltage divider (R, R1/10) are coupled to electronic switches (NM1/9) which are directly controlled from tapping points (1/9) of a second voltage divider (R11/19) which is fed by said control voltage and by a constant current (I3) supplied by constant current source means (PM1, PM2, NM11, NM10).

2. Gain control circuit according to claim 1, characterized in that said second voltage divider (R11/19) has a first terminal (9) controlled by said constant current source means (PM1, PM2, NM11, NM10) and a second terminal constituted by the tapping point (P) between on the one hand two parallel branches (PM2, PM4) and on the other hand an impedance branch (R20, NM12), a first (PM2) of said two branches forming part of said constant current source means (PM1, PM2₁ NM11, NM10) so that said constant current (I3) flows through it and a second (PM4) of said branches forming part of further control means (PM3, NM13, OA, PM5) able to produce in said second branch a second current (I2) which is function of said DC line current.

3. Gain control circuit according to claim 2, characterized in that said constant current source means (PM1, PM2, NM11, NM10) include a constant current source (PM1, PM2) arid a current mirror circuit (NM11, NM10), said constant current source being coupled to said second terminal (P) arid to said first terminal via said current mirror circuit (NM11, NM10).

4. Gain control circuit according to claim 2, characterized in that said impedance branch (R20, NM12) is constituted by the series connection of a resistance of (R20) and a diode connected MOS transistor (NM12)

5. Gain control circuit according to claim 2, characterized in that said further control means (PM3, NM13, OA, PM5) include a voltage-to-current converter (OA, NM13) to convert a voltage (V17) which is function of the DC line current into said second current (I2) and a second current mirror circuit coupling said converter to said second branch (PM4).

6. Gain control circuit according to claim 1, characterized in that said electronic switches are coupled in parallel with impedances of said second voltage divider and are constituted by MOS transistor switches (NM1/9) having a same source voltage (V) and the gates of which are connected to said tapping points (1/9).

**Patentansprüche**

1. Verstärkungsregelschaltung für eine Fernmeldevorrichtung, welche über eine Leitung mit einer Vermittlungsanlage gekoppelt ist, welche über die genannte Leitung Gleichstrom an die genannte Vorrichtung liefert, wobei die genannte Regelschaltung einen mit einem Eingang eines erstern Spannungsteilers (R, R1/10) gekoppelten Signaleingang (INS) aufweist, weiter einen Steuereingang (G1) aufweist, der eine Spannung erhält, die eine Funktion des genannten Leitungsgleichstromes ist, und endlich einen Signalausgang (01) auf den genannten ersten Spannungsteiler aufweist, auf welchem ein Ausgangssignal erscheint, dessen Verstärkung eine Funktion des genannten Leitungsgleichstromes ist, dadurch gekennzeichnet, dass Impedanzen des genannten ersten Spannungsteilers (R, R1/10) mit elektronischen Schaltern (NM1/9) gekoppelt sind, welche durch Anzapfungen (1/9) eines zweiten Spannungsteilers (R11/19) direkt gesteuert werden, welcher durch die genannte Steuerspannung und durch einen von Konstantstrommitteln (PM1, PM2, NM11, NM10) gelieferten Konstantstrom (I3) gespeist ist.

**2.** Verstärkungsregelschaltung nach Anspruch 1, dadurch gekennzeichnet, dass der genannte zweite Spannungsteiler (R11/19) eine erste durch die genannten Konstantstrommittel (PM1, PM2, NM11, NM10) gesteuerte erste Klemme (9) und eine durch den Anzapfpunkt (P) zwischen einerseits zwei parallelen Zweigen (PM2, PM4) und anderseits einem Impedanzzweig (R20, NH12) gebildete zweite Klemme aufweist, wobei ein erster (PM2) der genannten zwei Zweige Teil der genannten Konstantstrommittel (PM1, PM2, NM11, NM10) bildet, so dass der genannte konstante Strom (I3) darüber fliesst, und wobei ein zweiter der genannten Zweige Teil von weiteren Steuermitteln (PM3, NM13, OA, PM5) bildet, die in der Lage sind, im genannten zweiten Zweig einen zweiten Strom (I2) zu erzeugen, welcher eine Funktion des genannten Leitungsgleichstromes ist.

**3.** Verstärkungsregelschaltung nach Anspruch 2, dadurch gekennzeichnet, dass die genannten Konstantstrommittel (PM1, PM2, NM11, NM10) eine Konstantstromquelle (PM1, PM2) und eine Stromspiegelschaltung (NM111, NM10) aufweisen, wobei die genannten Konstantstromquelle mit der genannten zweiten Klemme (P) und über die genannte Stromspiegelschaltung (NM11, NM10) mit der genannten ersten Klemme gekoppelt ist.

**4.** Verstärkungsregelschaltung nach Anspruch 2, dadurch gekennzeichnet, dass der genannte Impedanzzweig (R20, NM12) durch die Serieschaltung eines Widerstandes (R20) und eines als Diode geschalteten MOS-Transistor (NM12) gebildet wird.

**5.** Verstärkungsregelschaltung nach Anspruch 2, dadurch gekennzeichnet, dass die genannten weiteren Steuermittel (PM3, NM13, OA, PM5) einen Spannungs/Strom-Wandler (OA, NM13) aufweisen, um eine Spannung (V17), welche eine Funktion des Leitungsgleichstromes ist, in den genannten zweiten Strom (I2) zu wandeln, und eine zweite Stromspiegelschaltung, welche den genannten Wandler mit dem genannten zweiten Zweig (PM4) koppelt.

**6.** Verstärkungsregelschaltung nach Anspruch 1, dadurch gekennzeichnet, dass die genannten elektronischen Schalter parallel zu den Impedanzen des genannten zweiten Spannungsteilers gekoppelt sind und aus MOS-Transistorschaltern (NM1/9) bestehen, welche die gleiche Quellenspannung (V) haben und deren Gatter mit den genannten Anzapfpunkten (1/9) verbunden sind.

**Revendications**

**1.** Circuit de commande de gain pour un dispositif de télécommunication qui est couplé, via une ligne à un autocommutateur qui alimente ledit dispositif en un courant continu de ligne sur ladite ligne, ledit circuit de commande ayant une entrée de signal (INS) qui est couplée à une entrée d'un premier diviseur de tension (R1/10), ayant une entrée de commande (G1) alimenté par une tension de commande qui est une fonction dudit courant continu de ligne, et ayant une sortie de signal (01) sur ledit premier diviseur de tension sur laquelle apparaît un signal de sortie dont le gain est une fonction dudit courant continu de ligne, caractérisé en ce que des impédances dudit premier diviseur de tension (R, R1/10) sont couplées à des commutateurs électroniques (NM1/9) qui sont commandés directement à partir de points de dérivation (1/9) d'un deuxième diviseur de tension (R11/19) alimenté par ladite tension de commande et par un courant constant (I3) fourni par des moyens de source de courant constant (PM1, PM2, NM11, NM10).

**2.** Circuit de commande de gain selon la revendication 1, caractérisé en ce que ledit deuxième diviseur de tension (R11/19) comporte une première borne (9) commandée par les-dits moyens de source de courant constant (PM1, PM2, NM11, NM10) et une deuxième borne constituée par le point de dérivation (P) entre, d'une part deux branches parallèles (PM2, PM4) et, d'autre part une branche d'impédances (R20, NM12), une première branche (PM2) desdites deux branches constituant une partie desdits moyens de source de courant constant (PM1, PM2, NM11, NM10) de sorte que ledit courant constant (I3) y circule, et la deuxième branche (PM4) desdites deux branches constituant une partie de moyens de commande supplémentaire (PM3, NM13, OA, PM5) aptes à générer dans ladite deuxième branche, un deuxième courant (I2) qui est une fonction dudit courant continu de ligne.

**3.** Circuit de commande de gain selon la revendication 2, caractérisé en ce que lesdits moyens de source de courant constant (PM1, PM2, NM11, NM10) comprennent une source de courant constant (PM1, PM2) et un circuit miroir du courant (NM11, NM10), ladite source de courant constant étant couplée à ladite deuxième borne (P) et audit premier terminal via ledit circuit miroir de courant (NM11, NM10).

4.  Circuit de commande de gain selon la revendication 2, caractérisé en ce que ladite branche d'impédance (R20, NM12) est constitué par la liaison en série d'une résistance (R20) et d'un transistor MOS (MN12) branché en diode.

5.  Circuit de commande de gain selon la revendication 2, caractérisé en ce que lesdits moyens supplémentaires de commande (PM3, NM13, OA, PM5) comprennent un convertisseur tension-courant (OA, NM13) convertissant une tension (V17) qui est une fonction du courant continu de ligne, en un deuxième courant (I2) ainsi qu'un deuxième circuit miroir de courant pour coupler ledit convertisseur à ladite deuxième branche (PM4).

6.  Circuit de commande de gain selon la revendication 1, caractérisé en ce que lesdits commutateurs électroniques sont couplés en parallèle avec des impédances dudit deuxième diviseur de tension et sont constituées par des commutateurs à transistor MOS (NM1/9) ayant la même tension de source (V) et dont les grilles sont raccordées audit points de dérivation (1/9).

GRC1